# EUROPEAN PATENT APPLICATION

(11) **EP 4 509 281 A1**
(43) Date of publication of application: **19.02.2025**
(21) Application number: 23806671.6
(22) Date of filing: 19.04.2023
(51) Int. Cl.: B25J 15/04, B25J 15/00, F16L 37/24, F16L 37/00

(54) **MALE CONNECTOR, FEMALE CONNECTOR, PICKUP DEVICE, QUICK-CHANGE MECHANISM, END EFFECTOR, MANIPULATOR AND ROBOT**

(30) Priority: 16.05.2022 CN 202210528019
(71) Applicant: Beijing Jingdong Qianshi Technology Co., Ltd., Beijing 100176 (CN)
(72) Inventor: ZHANG, Jian, Beijing 100176 (CN); CHEN, Ying, Beijing 100176 (CN); LIU, Xu, Beijing 100176 (CN); MEI, Tao, Beijing 100176 (CN); SONG, Guoku, Beijing 100176 (CN); CHENG, Yunjian, Beijing 100176 (CN)
(74) Representative: Prüfer & Partner mbB Patentanwälte · Rechtsanwälte
(86) International application number: PCT/CN2023/089088
(87) International publication number: WO 2023/221718

(57) **Abstract**

The present disclosure relates to a male connector, a female connector, a pickup device, a quick-change mechanism, an end effector, a manipulator and a robot. A male connector comprises a core rod and a locking member, wherein the core rod comprises a core rod body and a seat arranged at a first axial end of the core rod body and used for engaging with a hook of a female connector. The locking member is arranged on the outer side of the core rod body, and the core rod body is arranged in a slidable manner in an axial direction relative to locking member, an outer surface of the locking member comprises an abutment surface for abutting against an abutment portion of the female connector to push the abutment portion to move outward so as to disengage the snap hook from the seat. Unlocking between the male connector and the male connector of the end effector of the present disclosure can be completed by means of simple action of the manipulator, such that a pickup unit of the end effector can be quickly replaced without needing other control mechanisms or power sources, thereby improving the replacement efficiency of the pickup units.

## Description

### CROSS-REFERENCE TO RELATED APPLICATIONS

This present disclosure is based on and claims priority to the application with Application No. CN202210528019.8 filed on May 16, 2021, the disclosure of which is hereby incorporated herein by reference in its entirety.

### TECHNICAL FIELD

The present disclosure relates to a male connector, a female connector, a pickup device, a quick-change mechanism, an end effector, a manipulator and a robot.

### BACKGROUND

An end effector is an important part of a manipulator that picks up an article with a pickup unit to carry the article from one location to a designated location.

In order to adapt to different types of articles, the end effector needs to replace different pickup units, and how to improve the replacement efficiency of the pickup units is an urgent problem.

### SUMMARY

The present disclosure relates to a male connector, a female connector, a pickup device, a quick-change mechanism, an end effector, a manipulator and a robot, in order to improve the replacement efficiency of the pickup units.

A first aspect of the present disclosure provides a male connector, comprising:
a core rod comprising a core rod body and a seat, the seat arranged at a first axial end of the core rod body and configured to engage with a snap hook of a female connector, and
a locking member arranged on the outer side of the core rod body, the core rod body arranged in a slidable manner in an axial direction relative to locking member, an outer surface of the locking member comprising an abutment surface for abutting against an abutment portion of the female connector to push the abutment portion to move outward so as to disengage the snap hook from the seat.

In some embodiments, a distance between the abutment surface and an axis of the core rod body gradually decreases in a direction from a first end of the locking member proximate to the seat to a second end distal from the seat.

In some embodiments, the abutment surface comprises a first tapered surface.

In some embodiments, an outer surface of the locking member further comprises a second tapered surface connected to the first tapered surface, and a large diameter end of the second tapered surface is connected to a large diameter end of the first tapered surface.

In some embodiments, the male connector further comprises an elastic member configured to connect the locking member and a connecting portion arranged at an axial second end of the core rod body.

A second aspect of the present disclosure provides a female connector, comprising:
a body; and
a latch hook, a first end of the latch hook being rotatably connected to the body, and a second end of the latch hook comprising a snap hook and an abutment portion arranged on one side of the snap hook, the snap hook used for engaging with a seat of a male connector, the abutment portion configured to abut against an abutment surface of a male connector to move outward under a push of an abutment surface, so as to move the snap hook to disengage from the seat.

In some embodiments, the body comprises a sleeve with an opening extending in the axial direction and passing through in the thickness direction, the latch hook is provided at the opening, and the snap hook, driven by the abutment portion, enters or leaves the sleeve through the opening.

In some embodiments, the latch hook comprises a connecting rod rotatably connected to the body, and the snap hook is provided on the connecting rod and extends inward relative to the connecting rod.

In some embodiments, the snap hook has a hook face perpendicular to the connecting rod that is fit for an end face of the seat.

In some embodiments, a distance between the inner surface of the abutment portion and the axis of the body gradually decreases in the direction from a free end of the abutment portion to its connection with the snap hook.

In some embodiments, the inner surface comprises a tapered surface.

In some embodiments, the female connector further comprises a return spring arranged between the latch hook and the body.

In some embodiments, the female connector comprises at least two latch hooks spaced apart in the circumferential direction of the body.

A third aspect of the present disclosure provides an end effector, comprising:
a male connector comprising a core rod and a locking member, the core rod including a core rod body and a seat arranged at a first axial end of the core rod body,
a female connector comprising a body and a latch hook, a first end of the latch hook being rotatably connected to the body, and a second end of the latch hook comprising a snap hook and an abutment portion arranged on one side of the snap hook, and
a pickup unit connected at a second axial end of the core rod body and used for picking up an article,
wherein the end effector has a locked state in which the snap hook is engaged on the seat, and an unlocked state in which the snap hook of the latch hook is disengaged from the seat, and
wherein when the end effector is switched between the locked state and the unlocked state, the female connector is configured to move in axial direction to move the core rod relative to the locking member, and the abutment portion abuts against the abutment surface to move outward under a push of the abutment surface, so as to move the snap hook to disengage from the seat.

In some embodiments, in a direction from a first end of the locking member to a second end thereof, a distance between the abutment surface and the axis of the core rod body gradually decreases, so that the latch hook swings outward in abutment with the abutment surface.

In some embodiments, the abutment portion has an inner surface adapted to the abutment surface.

In some embodiments, the male connector further comprises an anti-rotation post arranged on the locking member, and the body has an anti-rotation hole, wherein in the locked state, a first end of the anti-rotation post extends beyond an end surface of the seat and fits into the anti-rotation hole.

A fourth aspect of the present disclosure provides a pickup device, comprising:
a pickup unit for picking up an article, comprising a connecting seat,
a core rod comprising a core rod body and a seat arranged at a first axial end of the core rod body, and the connecting seat being connected with a second axial end of the core rod body, and
a locking member arranged on the outer side of the core rod body, the core rod body being arranged in a slidable manner in an axial direction relative to the locking member, wherein the pickup device has a first state in which a first end of the locking member is abutted against the seat, and a second state in which a second end of the locking member is abutted against the connecting seat.

In some embodiments, the outer surface of the locking member comprises an abutment surface, and the distance between the abutment surface and the axis of the core rod body gradually decreases in the direction from a first end of the locking member to a second end thereof.

In some embodiments, the abutment surface comprises a first tapered surface.

In some embodiments, an outer surface of the locking member further comprises a second tapered surface connected to the first tapered surface, and a large diameter end of the second tapered surface is connected to a large diameter end of the first tapered surface.

In some embodiments, the locking member comprises a locking portion configured to mate with a carrier for placing the pickup unit to fix the locking member.

In some embodiments, the outer surface of the locking member comprises a cylindrical surface at a first end, and the cylindrical surface is provided with a recess forming the locking portion.

In some embodiments, the pickup device further comprises an elastic member arranged between the locking member and the connecting seat, wherein the elastic member is extended in the first state and compressed in the second state.

In some embodiments, the elastic member comprises a spring.

In some embodiments, the locking member comprises an inner bore for sleeving the core rod body, the inner bore comprises a stepped bore with a first bore section near a first end and a second bore section near a second end, the second bore section has a radius larger than the first bore section, the first bore section is in slidable fit with the core rod body, and the elastic member extends within the second bore section and is connected with a stepped surface between the first bore section and the second bore section.

In some embodiments, the pickup device further comprises an anti-rotation post arranged on the locking member, wherein in the first state, the first end of the anti-rotation post extending beyond an end surface of the seat.

In some embodiments, the pickup device comprises at least two pickup units and a connecting body for connecting at least two pickup units, the connecting body is connected to connecting seats of both of the at least two pickup units, and the connecting body is provided with a connecting hole for connecting to a second end of the core rod body.

In some embodiments, the inner wall of the connecting hole is provided with a convex portion, and a second end of the core rod body is provided with a concave portion that is in a concave-convex fit with the convex portion.

In some embodiments, the pickup unit comprises a sucker.

A fifth aspect of the present disclosure provides a quick-change mechanism, comprising:
a sleeve comprising an opening extending in an axial direction and passing through in a thickness direction, and
a latch hook arranged at the opening, and a first end of the latch hook being rotatably connected to the sleeve, and a second end of the latch hook including a snap hook and configured to enter or leave the sleeve through the opening.

In some embodiments, the latch hook comprises a connecting rod rotatably connected to the sleeve, and the snap hook is arranged on the connecting rod and extends radially inward relative to the connecting rod.

In some embodiments, a hook surface of the snap hook is vertical to the connecting rod.

In some embodiments, the latch hook further comprises an abutment portion arranged at an end of the snap hook remote from the connecting rod, and a distance between an inner surface of the abutment portion and an axis of the sleeve decreases gradually in the direction from a free end of the abutment portion to its connection with the snap hook.

In some embodiments, the inner surface comprises a tapered surface.

In some embodiments, the quick-change mechanism further comprises a return spring arranged between the latch hook and the sleeve.

In some embodiments, the quick-change mechanism further comprises a connecting portion provided on the sleeve and configured for connecting with a manipulator.

In some embodiments, the quick-change mechanism further comprises at least two latch hooks spaced apart in the circumferential direction of the sleeve.

A sixth aspect of the present disclosure provides a manipulator comprising the end effector as described above.

A seventh aspect of the present disclosure provides a robot comprising the manipulator as described above.

Based on the aspects provided in the present disclosure, the end effector can accomplish rapid replacement of pickup devices at the front end of the end effector by means of simple action of the manipulator, without needing other control mechanisms or power sources, thereby improving replacement efficiency of pickup units.

Other features and advantages of the disclosure will become clear from the following detailed description of exemplary embodiments thereof with reference to the accompanying drawings.

### BRIEF DESCRIPTION OF THE DRAWINGS

The accompanying drawings illustrated herein are used to provide a further understanding of the disclosure and are incorporated in and constitute a part of this disclosure. The exemplary embodiments of the disclosure and the description thereof serve to explain the disclosure and not to constitute an undue limitation of the disclosure. In the drawings:
Fig. 1 is a schematic view of an end effector placed on a carrier in some embodiments of the present disclosure.
Fig. 2 is a schematic view of the internal structure of the end effector of Fig. 1.
Fig. 3 is a schematic view of a perspective structure of a pickup device of the end effector of Fig. 1.
Fig. 4 is a schematic view of an internal structure of the end effector in Fig. 1 in the locked state.
Fig. 5 is schematic view of an internal structure of the end effector in Fig. 1 from the locked state to the unlocked state.
Fig. 6 is a schematic view of an internal structure of the end effector in Fig. 1 in the unlocked state.
Fig. 7 is a schematic view of an internal structure of a portion of the end effector in Fig. 1 in the unlocked state.
Fig. 8 is a schematic view of a perspective structure of a core rod and an unlocking member of the end effector of Fig. 1.
Fig. 9 is a schematic structural view of a pickup device of the end effector of Fig. 1 in a first state.
Fig. 10 is a schematic structural view of a pickup device of the end effector of Fig. 1 in a second state.
Fig. 11 shows a schematic structural view of the pickup device in some other embodiments of the present disclosure.

### DETAILED DESCRIPTION OF PREFERRED EMBODIMENTS

With reference to the accompanying drawings in the embodiments of the disclosure, the technical solutions in the embodiments of the disclosure will be described clearly and completely. Apparently, the embodiments described are only some embodiments of the disclosure, rather than all embodiments. The following description of at least one exemplary embodiment is in fact merely illustrative and is in no way limits the disclosure and its application, or uses. All other embodiments, which can be derived by a person skilled in the art from the embodiments disclosed herein without creative effort, are intended to be within the scope of the present disclosure.

The relative arrangement of parts and steps, numerical expressions and numerical values set forth in these embodiments do not limit the scope of the disclosure unless specifically stated otherwise. Meanwhile, it should be understood that the sizes of the respective portions shown in the drawings are not drawn in an actual proportional relationship for the convenience of description. Techniques, methods, and apparatus known to one of ordinary skill in the relevant art may not be discussed in detail, but are intended to be part of the specification where appropriate. In all examples shown and discussed herein, any particular value should be construed as exemplary only and not as limiting. Thus, other examples of the exemplary embodiments may have different values. It should be noted that: similar reference signs and letters refer to similar items in the accompanying drawings bellow, and thus, once an item is defined in one figure, it need not be discussed further in subsequent figures.

For ease of description, spatially relative terms, such as "above", "over", "on", "upper", and the like, may be used herein to describe one device or feature's spatial positional relationship to another device or feature as illustrated in the figures. It should be understood that the spatially relative terms are intended to encompass different orientations of the device in use or operation in addition to the orientation of the device depicted in the figures. For example, if a device in the figures is inverted, the device described as "above other devices or configurations" or "over other devices or configurations" would later be oriented as "below other devices or configurations" or "under other devices or configurations". Thus, the exemplary term "above" may include two orientations of "above" and "below". The device may also be positioned in other different ways and the spatially relative descriptors used herein interpreted accordingly.

An end effector is a grasping device that is typically coupled to the end of a manipulator for grasping an item. In the logistics, manipulators are often used to pick up goods through end effectors in order to achieve picking of goods.

An end effector includes a pickup unit that contacts the item to pick it up. In particular, the pickup unit includes a clamping gripper, a sucker or a magnetic attachment, etc. In other words, the pickup unit can pick up items in various ways.

In order to adapt to the needs of picking up different items, the end effector needs to change different pickup units. The process of replacing the pickup unit affects the efficiency of the end effector's pickup operation, so how to speed up this process is a problem that needs to be solved.

For example, for the pickup unit in the form of sucker, the current conventional method is to provide a sucker holder at the fixed position, when it is replaced, the manipulator moves to the sucker holder on which different suckers are placed, puts down the current sucker by means of the quick-change mechanism at the front end of the end effector, then moves to the replacing sucker and grasps the needed sucker by the quick-change mechanism, and performs the next pickup operation.

In the related technology known by the inventor, the current quick-change technology usually adopts two forms, one is that a grabbing and placing structure is provided at the head of the end effector, and it is pneumatically or electrically controlled to open and close so as to grab and place the sucker to be changed to realize the replacement. The other is that a magnetic part is provided at the head of the end effector to attract a sucker to be replaced by magnetic force, and the sucker and the magnetic part are forcibly separated by hard pulling during replacement. Both forms of quick-change technology require a control mechanism to control their action. Accordingly, it is necessary to connect a control line or an air path from the manipulator controller or an air source to the head of the end effector. The extension path of the control line or the air path is so long that the line or the air path are prone to entanglement, distortion, etc., which will lead to the shortening of the service life of the control line and the air path. And for the quick-change by using a magnetic part, due to the problem of poor control of magnetic force in magnetic attraction, the separation is difficult if the magnetic force is too big, and the sucker is prone to fall off if the magnetic force is too small.

In order to solve the above problems existing in the quick-change technology, the inventor proposed the end effector of the embodiment of the present disclosure after intensive research. The end effector comprises a pickup device and a quick-change mechanism and can realize locking and unlocking between the pickup device and the quick-change mechanism just by the action of a manipulator, thereby achieving the quick replacement of the pickup unit without the need for other power sources or control mechanisms. Unlocking and locking between the pickup device and the quick-change mechanism in this embodiment is achieved through the fit between a male connector of a pickup device and a female connector of a quick-change mechanism. The locking and unlocking can be achieved depending on the engagement of mechanical structures and the simple axial action between the male connector and the female connector, thus facilitating the replacement of pickup units of the pickup device. Of course, the male connector and female connector can also be used in other occasions that require easy unlocking and locking, not limited to end effectors.

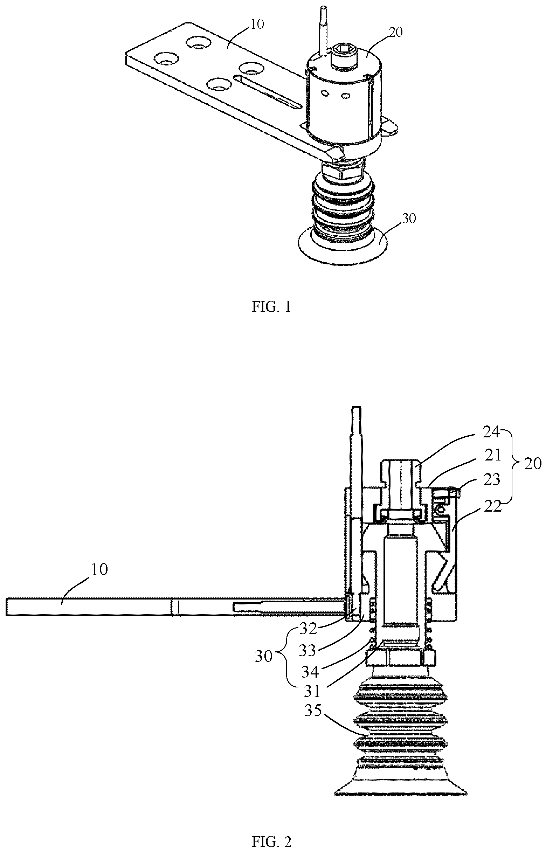

As shown in Fig. 1, when an end effector needs to replace a pickup unit, a manipulator moves the end effector horizontally to a carrier 10 and moves the end effector into the bayonet of the carrier 10. The male connector is now captured within the bayonet of the carrier 10 and is not rotatable nor movable in a vertical direction. At this moment, the manipulator is lifted upward to drive the female connector up, and the limiting relation between the male connector and the female connector is relieved, thus achieving unlocking and releasing between the female connector and the male connector. The manipulator then moves the female connector to the carrier for placing the pickup unit to be replaced, aligns the female connector with the male connector of the pickup unit to be replaced and drives the female connector down, so that a limit is formed between the male connector and the female connector to complete the locked connection. It can be seen that the end effector of this embodiment of the disclosure can realize the unlocked release or locked connection between the female connector and the male connector as long as the manipulator performs a simple movement in the horizontal and vertical direction, so that the replacement of the pickup unit can be completed quickly.

The specific structure of the end effector and the quick-change process according to this embodiment of the present disclosure will be described in detail below according to Figs. 2 to 10.

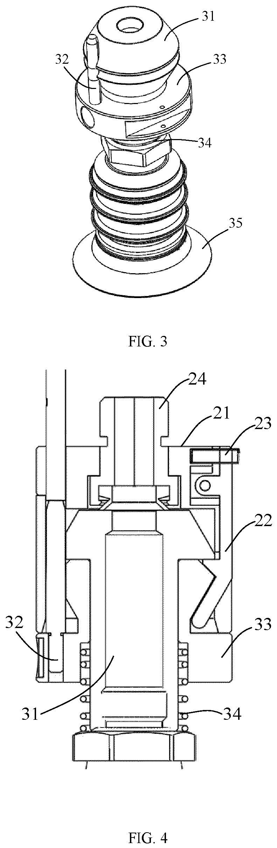

As shown in Fig. 2, an end effector of this embodiment of the present disclosure comprises a female connector, a male connector, and a pickup unit 35. The male connector and the pickup unit 35 are connected together to form the pickup device 30, as shown in Figs. 2 and 3. The female connector is part of a quick-change mechanism 20.

The female connector comprises a body and a latch hook 22. A first end of the latch hook 22 is rotatably connected to the body, and a second end of the latch hook 22 comprises a snap hook 222 and an abutment portion 223 arranged on one side of the snap hook 222.

The male connector comprises a core rod 31 and a locking member 33, wherein the core rod 31 comprises a core rod body 311 and a seat 312 arranged at a first axial end of the core rod body 311. The pickup unit 35 is connected to the axial second end of the core rod body 311 and used to pick up items.

The end effector has a locked state in which the snap hook 222 is engaged on the seat 312, and an unlocked state in which the snap hook 222 of the latch hook 22 is disengaged from the seat 312. When the end effector is switched between the locked state and the unlocked state, the female connector is configured to move in axial direction to move the core rod 31 relative to the locking member 33, and the abutment portion 223 abuts against the abutment surface to move outward under a push of the abutment surface, so as to move the snap hook to disengage from the seat 312. Outward here refers to swinging outward in the radial direction with respect to the axis of the core rod 31, so as to drive the snap hook 222 to move synchronously outward in the radial direction, thereby disengaging the snap hook 222 from the seat 312.

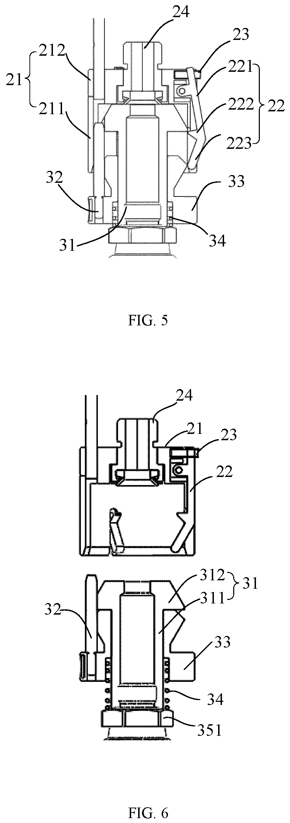

As shown in Fig. 4, the snap hook 222 is engaged with the seat 312 when the end effector is in the locked state. Through the hooking connection between the snap hook 222 and the seat 312, the core rod body 311 cannot be moved, thereby realizing the connection between the female connector and the male connector. When the end effector needs to replace the pickup unit, it is necessary to release the current male connector first, i.e. to make the end effector into the unlocked state, as shown in Fig. 5, at this time, the manipulator drives the female connector to move upward so that the snap hook 222 also moves upward with it. During this process, due to the hooking function between the snap hook 222 and the seat 312, the core rod 31 also moves upward along with the female connector in other words, the core rod 31 moves relative to the locking member 33. At this time, while the core rod 31 is moving upward, the abutment portion 223 abuts against the abutment surface to move outward under a push of the abutment surface so as to move the hook to disengage from the seat 312, so that the end effector enters the unlocked state shown in Fig. 6, and at this time, the female connector and the male connector are in the disengaged state.

It can be seen that the end effector of this embodiment of the present disclosure can accomplish rapid replacement of the pickup units at the front end of the end effector by means of simple action of the manipulator, without needing other control mechanisms or power sources, thereby improving the replacement efficiency of the pickup units.

In particular, the female connector comprises a sleeve 21 and a latch hook 22. The sleeve 21 comprises an opening extending in an axial direction and passing through in a thickness direction. The latch hook 22 is arranged at the opening, and a first end of the latch hook 22 is rotatably connected to the sleeve 21, and a second end of the latch hook 22 includes a snap hook 222 and configured to enter or leave the sleeve 21 through the opening.

Referring to Figs. 4 to 6, the male connector comprises a core rod 31 and a locking member 33. The pickup unit 35 comprises a connecting seat 351. The core rod 31 comprises a core rod body 311 and a seat 312. The seat 312 is arranged at a first axial end of the core rod body 311, and the connecting seat 351 is connected with a second axial end of the core rod body 311. The locking member 33 is arranged on the outer side of the core rod body 311. And the core rod body 311 is arranged in a slidable manner in an axial direction relative to the locking member 33. The male connector has a first state in which a first end of the locking member 33 is abutted against the seat 312, and a second state in which a second end of the locking member 33 is abutted against the connecting seat 351.

The end effector has a locked state in which the female connector is sleeved over the male connector and the snap hook 222 of the latch hook 22 enters the sleeve 22 through the opening and is engaged on the seat 312, and an unlocked state in which the snap hook 222 of the latch hook 22 is disengaged from the seat 312. When the end effector is switched between the locked state and the unlocked state, the female connector is configured to move in axial direction to drive the core rod 31 to move relative to the locking member 33.

The pickup unit 35 may be a sucker, a clamping jaw or other type. The pickup unit 35 comprises a pickup unit body and a connecting seat 351 located on the pickup unit body. The connecting seat 351 is used to connect with the core rod 31. As shown in Fig. 6, the core rod 31 comprises a core rod body 311 and a seat 312 arranged on the upper end of the core rod body 311, such that the seat 312 and the connecting seat 351 are respectively arranged at the upper and lower end of the core rod body 311 after the core rod 31 has been connected to the connecting seat 351. The core rod body 31 is arranged in a slidable manner in an axial direction relative to the locking member 33, so that the seat 312 and the connecting seat 351 have the function of limiting the movement of the core rod 31 as shown in Figs. 4 to 6. The core rod 31 reaches the limit position when the core rod 31 moves downward to enable the seat 312 to abut against the locking member 33. Similarly, the core rod 31 reaches the limit position when the core rod 31 moves upward and the locking member 33 abuts against the connecting seat 351.

As shown in Fig. 4, the sleeve 21 of the female connector is sleeved over the upper end of the male connector, and the snap hook 222 of the latch hook 22 enters the interior of the sleeve 21 through the opening and is engaged with the seat 312 when the end effector is in the locked state. Through the hooking connection between the snap hook 222 and the seat 312, the core rod body 31 cannot be moved, thereby realizing the connection between the female connector and the male connector. When the end effector needs to replace the pickup unit, it is necessary to release the current pickup unit first, i.e. to make the end effector into the unlocked state, as shown in Fig. 5, at this time, the manipulator drives the female connector to move upward so that the snap hook 222 also moves upward with it. During this process, due to the hooking function between the snap hook 222 and the seat 312, the core rod 31 also moves upward along with the female connector, in other words, the core rod 31 moves relative to the locking member 33, so that the snap hook 222 is disengaged from the seat 312 and thus the end effector enters the unlocked state shown in Fig. 6, and at this time, the female connector and the male connector are in the disengaged state.

When the end effector is switched from the locked state to the unlocked state, the latch hook 22 needs to swing outward relative to the sleeve 21 so as to realize the disengagement from the seat 312.

In some embodiments, the outer surface of the locking member 33 is configured to push the latch hook 22 to swing outward when the core rod 31 moves upward relative to the locking member 33. In this way, when switched from the locked state to the unlocked state, the locking member 33 is fixed, the core rod 31 moves upward relative to the locking member 33 under the driving of the latch hook 22, while the locking hook 22 is swinging outward under the driving of the outer surface of the locking member 33. Accordingly, during its outward swinging, the hooking area between the latch hook 22 and the seat 312 gradually decreases until they are disengaged, thereby causing the female connector and the male connector to disengage from each other.

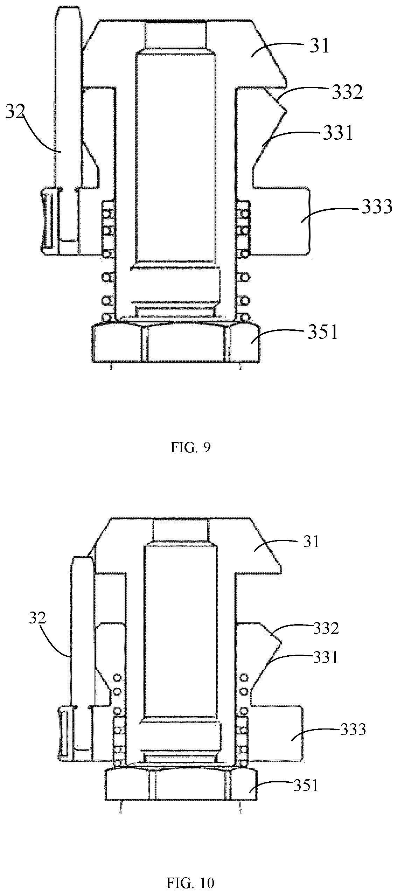

In particular, as shown in Fig. 9, the outer surface of the locking member 33 includes an abutment surface. In a direction from the first end of the locking member 33 to the second end thereof, the distance between the abutment surface and its axis gradually decreases. Accordingly, when the core rod 31 moves upward relative to the locking member 33, the abutment between the latch hook 22 and the outer surface of the locking member 33 moves from bottom to top, then the locking hook 22 is gradually pushed to the outer side in the radial direction, which causes the locking hook 22 to swing outward, and thus to achieve a disengagement from the seat 312.

The abutment surface comprises a first tapered surface 331. In particular, a small diameter end of the first tapered surface 331 is located at the lower end and a large diameter end of the first tapered surface 331 is located at the upper end. This causes the abutment point of the latch hook 22 with the first tapered surface 331 to move radially outwardly, which in turn pushes the latch hook 22 to swing outward.

In other embodiments not shown in the figures, the abutment surface may also be other shapes such as spherical, ramped, etc., as long as the distance between the abutment surface and the axis can gradually increase from the lower end to the upper end to achieve the outward pushing of the latch hook 22.

In order to achieve the disengagement between the snap hook 222 and the seat 312 while the latch hook 22 swings outward under the push of the abutment surface, it is necessary to make the maximum horizontal distance between the abutment surface and the axis greater than the length of the contact surface of the hooking contact between the hook surface of the snap hook 222 and the seat 312, so as to ensure that the snap hook 222 and the seat 312 can be disengaged after the abutment surface has been disengaged from the latch hook 22.

Further, in order to form a fit between the latch hook 22 and the abutment surface, the latch hook 22 comprises an abutment portion 223 in abutment with the abutment surface, and the inner surface of the abutment portion 223 is adapted to the abutment surface. In this way, in the case where the abutment surface is a tapered surface, the inner surface of the abutment portion 223 is also a tapered surface. Such an arrangement as shown in Fig. 4 allows the abutment portion 223 and the abutment surface of the locking member 33 to contact and fit in the locked state without position interference, thereby making the volume of the end effector smaller in the locked state.

As shown in Fig. 5, the latch hook 22 comprises a connecting rod 221 rotatably connected to the sleeve 21. The snap hook 222 is arranged on the connecting rod 221 and extends radially inward relative to the connecting rod 221. In such a way, the snap hook 333 may swing outward driven by the connecting rod 221.

In some embodiments, a hook surface of the snap hook 222 is vertical to the connecting rod 221. In such a way, the contact area between the hook surface of the snap hook 222 and the seat 312 is larger, improving the stability of the end effector when in the locked state.

The female connector further comprises a return spring 23 arranged between the latch hook 22 and the sleeve 21. It is shown in Figs. 4 to 6, when the latch hook 22 swings outward so that the snap hook 222 is disengaged from the hooking with the seat 312, as shown in Fig. 6, the latch hook 22 can be automatically reset to the vertical state under the function of the return spring 23.

As shown in Fig. 2, the male connector further comprises an elastic member 34 configured to connect the locking member 33 and a connecting portion arranged at an axial second end of the core rod body 11. In a specific embodiment, the connecting portion is the connecting seat 351 on the upper end of the pickup unit 35, and the connecting seat 351 is connected to the axial second end of the core rod body 11. In some other embodiments, the connecting portion is directly connected to the axial second end of the core rod body 11.

As shown in Fig. 4, when the end effector is in the locked state, the male connector is in the first state where the elastic member 34 is extended. When the core rod 31 is moved upward under the drive of the female connector as shown in Fig. 5, since the locking member 33 is fixed, the core rod 31 moves relative to the locking member 33, the male connector is in the second state where the elastic member 34 is compressed. As shown in Fig. 6, after the disengagement between the male connector and the female connector has been completed, the elastic member 34 is extended to move the core rod 31 downward and further bring the male connector back to the first state.

In some embodiments, the elastic member 34 comprises a spring.

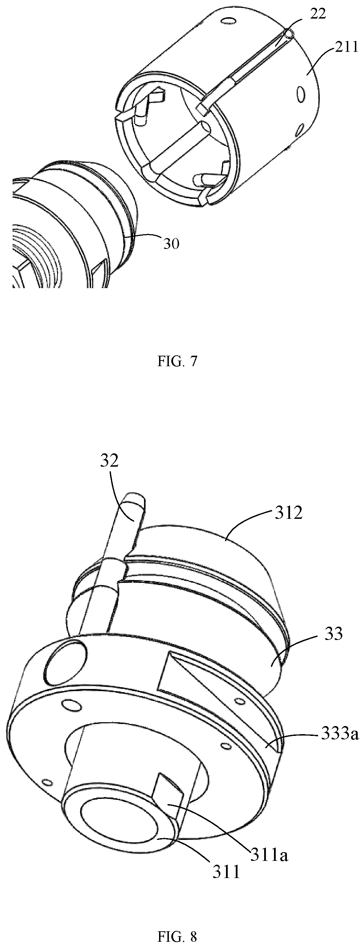

In order to make the locking member 33 fixed in the unlocking process, in some embodiments, the locking member 33 comprises a locking portion 333a configured to mate with a carrier 10 for placing the pickup unit to fix the locking member 33. In particular, the locking portion 333a may be a snap slot shown in Fig. 8 that co-acts with the bayonet on the carrier 10 to secure the locking member 33 and thereby prevent it from rotating.

As can be seen from the above analysis, when the end effector in the embodiment of the present disclosure needs to complete the quick change of the pickup unit, its action process is as follows: the manipulator carries the end effector horizontally to reach the carrier 10, while the snap slot on the locking member 33 is not rotatable at the bayonet of the carrier 10 as shown in Figs. 1 and 2. The manipulator is lifted upward, driving the female connector up. The locking member 33 is fixed since it is snapped in the carrier 10. The female connector drives the core rod 31 up. The elastic member 34 is compressed. The change occurs to the relative position of the core rod 31 and the locking member 33 in the axial direction. The outer surface of the locking member 33 pushes the latch hook 22 of the female connector outward, which in turn causes the latch hook 22 to disengage from the hooking of the seat 312 of the core rod 31, thus achieving an unlocked release. When a new pickup unit needs to be connected, the manipulator drives the end effector without the pickup unit to move above the pickup unit to be used and move downward. At this time, the abutment portion of the latch hook 22 swings outward under the guidance of the outer surface of the locking member 33. After moving down to the predetermined position, the latch hook 22 swings back to the vertical position under the function of the return spring, so that the hook surface of the latch hook 22 snaps under the seat 312 to achieve the connection between the female connector and the male connector. The manipulator then drives the end effector to move horizontally, and after the snap slot of the locking member 33 is completely disengaged from the carrier 10, the connection to the pickup unit is achieved.

The structure of the pickup device 30 and the quick-change mechanism 20 of an embodiment of the present disclosure is further described below in accordance with Figs. 3 to 11.

As shown in Fig. 3, the pickup device 30 in this embodiment of the present disclosure comprises a pickup unit 35 and a male connector. In particular, the pickup device 30 comprises a pickup unit 35, a core rod 31 and a locking member 33.

The pickup unit 35 is used for picking up an article, and it comprises a connecting seat 351. In particular, the pickup unit 35 comprises a sucker and a connecting seat 351 arranged on the top of the sucker.

As shown in Figs. 6, 8 and 10, the core rod 31 comprises a core rod body 311 and a seat 312. The seat 312 is arranged at a first axial end of the core rod body 311, and the connecting seat is connected with a second axial end of the core rod body 311.

In particular, the core rod body 311 and the seat 312 are integrally formed, i.e. the seat 312 is integrally formed on the upper end of the core rod body 311. And in the specific embodiment, the outer surface of the seat 312 is a tapered surface, and the upper end surface of the seat 312 has a smaller area than the lower end surface thereof, which can prevent the latch hook 22 from interfering with the outer surface of the seat 312 after being disengaged from the seat 312. And the core rod body 311 and the seat 312 are configured in the hollow manner, which can reduce the weight of the pickup device 30.

The locking member 33 is arranged on the outer side of the core rod body 311. And the core rod body 311 is arranged in a slidable manner in an axial direction relative to the locking member 33. The pickup device 30 has a first state in which a first end of the locking member 33 is abutted against the seat 312, and a second state in which a second end of the locking member 33 is abutted against the connecting seat 351.

In the embodiment as shown in Fig. 6, the locking member 33 is in an annular structure that is sleeved over the core rod body 311. And the inner bore of the annular structure is in a slidable fit with the core rod body 311. In other embodiments, the locking member 33 may also be in other shapes, e.g., the locking member 33 is a locking block having an arc-shaped slot disposed on one side of the core rod body 311, and the side of the locking block adjacent to the core rod body 311 has an arc-shaped slot such that the core rod body 311 is axially slidable relative to the locking block, and the side of the locking block remote from the core rod body 311 has an abutment surface to push the latch hook 22 to swing outward.

As can be known, the pickup device 30 is in the first state when the end effector is both in the locked state and in the unlocked state. The pickup device 30 can be brought in the second state only if the core rod body 311 moves relative to the locking member 33, when the end effector is switched between the locked state and the unlocked state.

In some embodiments, the outer surface of the locking member 33 comprises an abutment surface projecting radially outwardly relative to the axis of the core rod body 311. In the direction from the first end of the locking member 33 to the second end thereof, the distance between the abutment surface and the axis gradually decreases. And when the core rod 31 moves upward relative to the locking member 33, the abutment between the latch hook 22 and the outer surface of the locking member 33 moves from bottom to top, then the locking hook 22 is gradually pushed to the outer side in the radial direction, which causes the locking hook 22 to swing outward, and thus to achieve a disengagement from the seat 312.

The abutment surface comprises a first tapered surface 331. In particular, the small diameter end of the first tapered surface 331 is located at the lower end and the large diameter end of the first tapered surface 331 is located at the upper end. This enables the abutment point of the latch hook 22 with the first tapered surface 331 to move gradually outward in the radial direction, which in turn pushes the latch hook 22 to swing outward.

In some embodiments, as shown in Figs. 9 and 10, the outer surface of the locking member 33 further comprises a second tapered surface 332 connected to the first tapered surface 331. The large diameter end of the second tapered surface 332 is connected to the large diameter end of the first tapered surface 331. The second tapered surface 332 creates a gap at the edge of the second end of the locking member 33, which in turn leaves space for the hooking of the snap hook 222 of the latch hook 22 with the seat 312.

In order to match this shape, the lower surface of the snap hook 222 of the latch hook 22 also has the same shape as the second tapered surface 232.

In some embodiments, as shown in Fig. 8, the locking member 33 comprises a locking portion 333a. The locking portion 333a is configured to mate with a carrier 10 for placing the pickup unit to fix the locking member 33.

In some embodiments, the outer surface of the locking member 33 comprises a cylindrical surface 333 at a first end, and the cylindrical surface 333 is provided with a recess forming the locking portion 333a.

As shown in Fig. 8, the locking member 33 comprises a cylindrical surface 333 at a first end. The cylindrical surface 333 has a larger radius than the large diameter end of the first tapered surface 331. And the cylindrical surface 333 has a smaller radius than the maximum radius of the seat 312. In other words, the cylindrical surface 333 forms the largest portion in the radial direction of the locking member 33. Two opposite sides of the cylindrical surface 333 is respectively provided with a slot that forms the locking portion 333a. The slot is square, such that when the pickup device 30 is moved horizontally into the bayonet of the carrier 10, the extension arms on both sides of the bayonet 10 extend into the slot to form a snap-fit, thereby preventing the locking member 33 from moving and rotating in the vertical direction.

In some embodiments, as shown in Figs. 9 and 10, the pickup device 30 further comprises an elastic member 34 arranged between the locking member 33 and the connecting seat 351. The elastic member 34 is extended in the first state and compressed in the second state.

In some embodiments, the elastic member 34 comprises a spring.

In some embodiments, as shown in Figs. 9 and 10, the sleeve 22 comprises an inner bore for sleeving the core rod body 311. The inner bore comprises a stepped bore with a first bore section near a first end and a second bore section near a second end. The second bore section has a radius larger than the first bore section. The first bore section is in slidable fit with the core rod body 311. The elastic member 34 extends within the second bore section and is connected with the stepped surface between the first bore section and the second bore section. This arrangement increases the distance between the two ends of the elastic member 24.

In some embodiments, the pickup device 30 further comprises an anti-rotation post 32 arranged on the locking member 33. In the first state, the first end of the anti-rotation post 32 extends beyond an end surface of the seat 312. In such a way, when the end effector is in the locked state, the anti-rotation post 32 extends beyond the seat 312 and mates with the anti-rotation hole provided in the sleeve 21, thereby further preventing the rotation of the locking member 33.

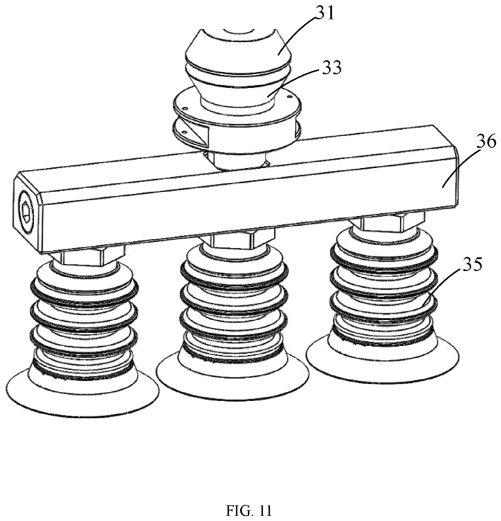

In some embodiments, as shown in Fig. 11, the pickup device 30 comprises at least two pickup units 35 and a connecting body 36 for connecting the at least two pickup units 35. The connecting body 36 is connected to connecting seats 351 of both of the at least two pickup units 35. And the connecting body 35 is provided with a connecting hole connected to a second end of the core rod body 311. In this way, the pickup device of this embodiment can achieve the pickup of at least two articles at the same time, further improving the pickup efficiency. In some embodiments, at least two pickup units 35 are different pickup units.

In some embodiments, the inner wall of the connecting hole is provided with a convex portion, and a second end of the core rod body 311 is provided with a concave portion 311a that is in a concave-convex fit with the convex portion. The concave portion 311a is provided at the lower end of the core rod body 311, and it can be embedded in the connecting body 36 to produce an anti-rotation effect.

In some embodiments, the anti-rotation post 32 is provided with a first sensor. The first sensor and a second sensor provided on the sleeve 21 of the quick-change mechanism 20 co-act with each other inductively to determine whether the pickup device 30 is connected or falls off during operation.

As shown in Figs. 5 and 7, the quick-change mechanism 20 provided by this embodiment of the present disclosure comprises a female connector, in particular a sleeve 21 and a latch hook 22, wherein the sleeve 21 comprises an opening extending in the axial direction and passing through in the thickness direction. The latch hook 22 is arranged at the opening, and a first end of the latch hook 22 is rotatably connected to the sleeve 21, and a second end of the latch hook 22 includes a snap hook 222 and configured to enter or leave the sleeve 21 through the opening.

In particular, in the embodiment shown in Fig. 7, the sleeve 21 has at least two openings disposed circumferentially and at least two latch hooks 22 disposed corresponding to the at least two openings. In this way, when the end effector is in the locked state, at least two latch hooks 22 in different positions are hooked with the seat 312 of the core rod 31, thereby improving the connection stability between the female connector and the male connector.

In some embodiments, as shown in Fig. 5, the latch hook 22 comprises a connecting rod 221 rotatably connected to the sleeve 21. The snap hook 222 is arranged on the connecting rod 221 and extends radially inwardly relative to the connecting rod 221.

In some embodiments, a hook surface of the snap hook 222 is vertical to the connecting rod 221.

In particular, as shown in Fig. 5, the sleeve 21 comprises a sleeve body 211 and an end cap 212. One end of the sleeve body 211 is configured to be open to sleeve above the male connector, and the end cap 212 is disposed at the other end of the sleeve body 211. The first end of the connecting rod 221 is connected to the end cap 212 by a return spring 23. At the location of the connecting rod 212 near the first end, a hinge seat is provided, which is glued to the end cap 212, and the second end of the connecting rod 221 is provided with a snap hook 222 and an abutment portion 223 provided at the lower end of the snap hook 222.

In some embodiments, the latch hook 22 comprises a connecting rod 221 rotatably attached to the end cap. The snap hook 222 is provided on the connecting rod 221 and extends radially inwardly relative to the connecting rod 221. The latch hook 22 further comprises an abutment portion 223 arranged at an end of the snap hook 222 remote from the connecting rod 221. The abutment portion 223 includes an inner surface. The distance between an inner surface and an axis of the sleeve body 211 decreases gradually in the direction from the free end of the abutment portion 223 to its connection with the snap hook 222.

In some embodiments, the inner surface comprises a tapered surface.

In some embodiments, as shown in Fig. 6, the quick-change mechanism 20 further comprises a connecting member 24 provided on the end cap 212 and configured for connecting with a manipulator. In particular, the connecting member 24 is a hexagonal connector, the top of which is a threaded interface. The mating connection between the connecting member 24 and the manipulator enables adjustment of the operation angle of the end effector.

In summary, the end effector in the embodiments of the present disclosure designs the structure of the female connector and the male connector, such that the replacement can be achieved only depending on the mutual interaction of the mechanical structures between the two, thereby reducing the excessive control and acting parts and ensuring the reliable replacement of pickup units. And the end effector triggered in mechanical form has a greater load capacity.

Finally, it is to be noted: the above embodiments are only intended to illustrate the technical solution of the disclosure and not to limit it; although the disclosure has been described in detail with reference to preferred embodiments, the ordinary skill in the art will understand that: modifications to the specific embodiments of the disclosure or equivalent substitutions for parts of the technical features may still be made; all of which are intended to be covered by the scope of the technical solutions claimed in this disclosure without departing from the spirit thereof.

## Claims

1. A male connector, comprising:
a core rod (31) comprising a core rod body (311) and a seat (312), the seat arranged at a first axial end of the core rod body (311) and configured to engage with a snap hook (222) of a female connector; and
a locking member (33) arranged on an outer side of the core rod body (311), the core rod body (311) arranged in a slidable manner in an axial direction relative to locking member (33), an outer surface of the locking member (33) comprising an abutment surface for abutting against an abutment portion (223) of the female connector to push the abutment portion (223) to move outward so as to disengage the snap hook (222) from the seat (312).

2. The male connector according to claim 1, wherein a distance between the abutment surface and an axis of the core rod body (311) gradually decreases in a direction from a first end of the locking member (33) proximate to the seat (312) to a second end distal from the seat (312).

3. The male connector according to claim 2, wherein the abutment surface comprises a first tapered surface (331).

4. The male connector according to claim 3, wherein an outer surface of the locking member (33) further comprises a second tapered surface (332) connected to the first tapered surface (331), and wherein a large diameter end of the second tapered surface (332) is connected to a large diameter end of the first tapered surface (331).

5. The male connector according to any one of claims 1-4, further comprising an elastic member (34) configured to connect the locking member (33) and a connecting portion arranged at an axial second end of the core rod body (11).

6. A female connector, comprising:
a body; and
a latch hook (22), a first end of the latch hook (22) being rotatably connected to the body, and a second end of the latch hook (22) comprising a snap hook (222) and an abutment portion (223) arranged on one side of the snap hook (222), the snap hook (222) configured to engage with a seat (312) of a male connector, the abutment portion (223) configured to abut against an abutment surface of a male connector to move outward under a push of an abutment surface, so as to move the snap hook (222) to disengage from the seat (312).

7. The female connector according to claim 6, wherein the body comprises a sleeve (21) with an opening extending in the axial direction and passing through in the thickness direction, the latch hook (22) is provided at the opening, and the snap hook (22) , driven by the abutment portion (223), enters or leaves the sleeve (21) through the opening.

8. The female connector according to claim 6 or 7, wherein the latch hook (22) comprises a connecting rod (221) rotatably connected to the body, and the snap hook (222) is provided on the connecting rod (221) and extends inward relative to the connecting rod (221).

9. The female connector according to any one of claims 6 to 8, wherein the snap hook (222) has a hook face perpendicular to the connecting rod (221) that is fit for an end face of the seat (312).

10. The female connector according to any one of claims 6 to 9, wherein a distance between an inner surface of the abutment portion (223) and an axis of the body gradually decreases in the direction from a free end of the abutment portion (223) to its connection with the snap hook (222).

11. The female connector of claim 10, wherein the inner surface comprises a tapered surface.

12. The female connector according to any one of claims 6 to 11, further comprising a return spring (23) arranged between the latch hook (22) and the body.

13. The female connector according to any one of claims 6 to 11, comprising at least two of said latch hooks (22) spaced apart in a circumferential direction of the body.

14. An end effector, comprising:
a male connector comprising a core rod (31) and a locking member (33), the core rod (31) comprising a core rod body (311) and a seat (312) arranged at a first axial end of the core rod body (311),
a female connector comprising a body and a latch hook (22), a first end of the latch hook (22) being rotatably connected to the body (21), and a second end of the latch hook (22) comprising a snap hook (222) and an abutment portion (223) arranged on one side of the snap hook (222), and
a pickup unit (35) connected at a second axial end of the core rod body (311) and used for picking up an article,
wherein the end effector has a locked state in which the snap hook (222) is engaged on the seat (312), and an unlocked state in which the snap hook (222) of the latch hook (22) is disengaged from the seat (312), and
wherein when the end effector is switched between the locked state and the unlocked state, the female connector is configured to move in axial direction to move the core rod (31) relative to the locking member (33), and the abutment portion (223) abuts against the abutment surface to move outward under a push of the abutment surface, so as to move the snap hook (222) to disengage from the seat (312).

15. The end effector according to claim 14, wherein in a direction from a first end of the locking member (33) to a second end thereof, a distance between the abutment surface and an axis of the core rod body gradually decreases, so that the latch hook (22) swings outward in abutment with the abutment surface.

16. The end effector according to claim 15, wherein the abutment portion (223) has an inner surface adapted to the abutment surface.

17. The end effector according to any one of claims 14 to 16, wherein the male connector further comprises an anti-rotation post (32) arranged on the locking member (33), and the body has an anti-rotation hole, wherein in the locked state, a first end of the anti-rotation post (32) extends beyond an end surface of the seat (312) and fits into the anti-rotation hole.

18. A pickup device (30), comprising:
a pickup unit (35) for picking up an article, comprising a connecting seat (351),
a core rod (31) comprising a core rod body (311) and a seat (312) arranged at a first axial end of the core rod body (311), and the connecting seat being connected with a second axial end of the core rod body (311), and
a locking member (33) arranged on an outer side of the core rod body (311), the core rod body (311) arranged in a slidable manner in an axial direction relative to the locking member (33),
wherein the pickup device (30) has a first state in which a first end of the locking member (33) is abutted against the seat (312), and a second state in which a second end of the locking member (33) is abutted against the connecting seat (351).

19. The pickup device according to claim 18, wherein an outer surface of the locking member (33) comprises an abutment surface, and a distance between the abutment surface and an axis of the core rod body (311) gradually decreases in a direction from a first end of the locking member (33) to a second end thereof.

20. The pickup device according to claim 19, wherein the abutment surface comprises a first tapered surface (331).

21. The pickup device according to claim 20, wherein an outer surface of the locking member (33) further comprises a second tapered surface (332) connected to the first tapered surface (331), and wherein a large diameter end of the second tapered surface (332) is connected to a large diameter end of the first tapered surface (331).

22. The pickup device according to any one of claims 18 to 21, wherein the locking member (33) comprises a locking portion (333a) configured to mate with a carrier (10) for placing the pickup unit to fix the locking member (33).

23. The pickup device according to claim 22, wherein an outer surface of the locking member (33) comprises a cylindrical surface (333) at a first end, and the cylindrical surface (333) is provided with a recess forming the locking portion (333a).

24. The pickup device according to any one of claims 18 to 23, further comprising an elastic member (34) arranged between the locking member (33) and the connecting seat (351), the elastic member (34) being extended in the first state and compressed in the second state.

25. The pickup device according to claim 24, wherein the elastic member (34) comprises a spring.

26. The pickup device according to claim 24 or 25, wherein the locking member (22) comprises an inner bore for sleeving the core rod body (311), the inner bore comprises a stepped bore with a first bore section near a first end and a second bore section near a second end, the second bore section has a radius larger than the first bore section, the first bore section is in slidable fit with the core rod body (311), and the elastic member (34) extends within the second bore section and is connected with a stepped surface between the first bore section and the second bore section.

27. The pickup device according to any one of claims 18 to 26, further comprising an anti-rotation post (32) arranged on the locking member (33), in the first state, the first end of the anti-rotation post (32) extending beyond an end surface of the seat (312).

28. The pickup device according to one of the claims 18 to 26, comprising at least two of said pickup units (35) and a connecting body (36) for connecting the at least two pickup units (35), the connecting body (36) being connected to connecting seats (351) of both of the at least two pickup units (35), and the connecting body (36) being provided with a connecting hole for connecting to a second end of the core rod body (311).

29. The pickup device according to claim 28, wherein an inner wall of the connecting hole is provided with a convex portion, and a second end of the core rod body (311) is provided with a concave portion that is in a concave-convex fit with the convex portion.

30. The pickup device according to any one of claims 18 to 26, wherein the pickup unit (35) comprises a sucker.

31. A quick-change mechanism (20), comprising:
a sleeve (21) comprising an opening extending in an axial direction and passing through in a thickness direction, and
a latch hook (22) arranged at the opening, a first end of the latch hook being rotatably connected to the sleeve (21), and a second end of the latch hook (22) including a snap hook (222) and configured to enter or leave the sleeve (21) through the opening.

32. The quick-change mechanism according to claim 31, wherein the latch hook (22) comprises a connecting rod (221) rotatably connected to the sleeve (21), and the snap hook (222) is arranged on the connecting rod (221) and extends radially inward relative to the connecting rod (221).

33. The quick-change mechanism according to claim 32, wherein a hook surface of the snap hook (222) is vertical to the connecting rod (221).

34. The quick-change mechanism according to claim 32 or 33, wherein the latch hook (22) further comprises an abutment portion (223) arranged at an end of the snap hook (222) remote from the connecting rod (221), and a distance between an inner surface of the abutment portion (223) and an axis of the sleeve (21) decreases gradually in the direction from a free end of the abutment portion (223) to its connection with the snap hook (222).

35. The quick-change mechanism according to claim 34, wherein the inner surface comprises a tapered surface.

36. The quick-change mechanism according to any one of claims 31 to 35, further comprising a return spring (23) arranged between the latch hook (22) and the sleeve (21).

37. The quick-change mechanism according to any one of claims 31 to 35, further comprising a connecting member (24) provided on the sleeve (21) and configured for connecting with a manipulator.

38. A quick-change mechanism according to any one of claims 31 to 35, comprising at least two of the latch hooks (22) spaced apart in a circumferential direction of the sleeve (21).

39. An end effector, comprising a pickup device (30) according to any one of claims 18 to 30 and a quick-change mechanism (20) according to any one of claims 31 to 38, the end effector having a locked state in which the quick-change mechanism (20) is sleeved over the pickup device (30), and an unlocked state in which a snap hook (222) of the latch hook (22) enters the sleeve (21) through the opening and engaged onto the seat (312), wherein in the unlocked state, the snap hook (222) of the latch hook (22) is separated from the seat (312), and wherein the quick-change mechanism (20) is configured to move in an axial direction to move the core rod (31) relative to the locking member (33) when the end effector is switched between the locked state and the unlocked state.

40. The end effector according to claim 39, wherein an outer surface of the locking member (33) is configured to push the latch hook (22) to swing outward when the core rod (31) moves upward relative to the locking member (33).

41. The end effector according to claim 40, wherein the outer surface of the locking member (33) comprises an abutment surface, and wherein in a direction from a first end of the locking member (33) to a second end thereof, a distance between the abutment surface and the axis of the core rod body gradually decreases, so that the latch hook (22) swings outward in abutment with the abutment surface.

42. The end effector according to any one of claims 39 to 41, wherein the latch hook (22) comprises an abutment portion (223) in abutment with the abutment surface, and the abutment portion (223) has an inner surface adapted to the abutment surface.

43. The end effector according to any one of claims 39 to 41, wherein the pickup device (30) further comprises an anti-rotation post (32) arranged on the locking member (33), and the sleeve has an anti-rotation hole, and wherein in the locked state, a first end of the anti-rotation post (32) extends beyond an end surface of the seat (312) and fits into the anti-rotation hole.

44. A manipulator, comprising an end effector according to any one of claims 14 to 17 and according to any one of claims 39 to 43.

45. A robot, comprising a manipulator according to claim 44.
